# FASCICULE DE BREVET EUROPEEN

(11) **EP 2 459 104 B1**
(45) Date de publication et mention de la délivrance du brevet: **21.02.2018**
(21) Numéro de dépôt: 10752040.5
(22) Date de dépôt: 19.07.2010
(51) Int. Cl.: A61C 5/90, A61C 5/62, A61C 9/00, A61M 35/00, B43M 11/06

(54) **EMBOUT D'APPLICATION**
APPLIKATORSPITZE
APPLICATOR TIP

(30) Priorité: 30.07.2009 FR 0955370
(43) Date de publication de la demande: 06.06.2012
(73) Titulaire: Produits Dentaires Pierre Rolland, 33708 CEDEX Merignac (FR)
(72) Inventeur: MAURAT, Vincent, F-33600 Pessac (FR); FOURNIE, Margueritte, F-33510 Andernos-les-Bains (FR)
(74) Mandataire: Desormiere, Pierre-Louis
(86) Numéro de dépôt international: PCT/FR2010/051509
(87) Numéro de publication internationale: WO 2011/012792

(56) Documents cités:
- EP-A- 0 463 979
- EP-A1- 1 810 712
- GB-A- 467 245
- US-A- 2 014 149
- US-A- 5 277 511
- US-B1- 6 428 233

## Description

### Arrière plan de l'invention

La présente invention se rapporte aux dispositifs d'application de produit visqueux ou pâteux. Elle concerne plus particulièrement mais non exclusivement les embouts utilisés pour l'application de tels produits dans le domaine dentaire.

Lors d'un traitement dentaire tel qu'une opération de blanchiment des dents, la gencive du patient est préalablement protégée au moyen d'une composition visqueuse photopolymérisable permettant de former une barrière de protection encore appelée digue dentaire. Afin d'assurer une protection efficace de la gencive du patient vis-à-vis des produits de blanchiment, la composition doit être étalée uniformément sur la gencive.

Le document EP 0 956 084 décrit un embout d'application de produits dentaires qui est formé d'une canule dont l'extrémité d'application est dotée de soies fibreuses afin de faciliter l'étalement du produit. Toutefois, un tel embout ne permet pas de déposer une bande de produit ayant une largeur importante et une épaisseur uniformes.

Les documents EP 1 810 712, US 2006/0065677 et EP 0 463 979 décrivent des embouts d'application munis d'une spatule à leur extrémité de sortie pour faciliter l'étalement du produit. Cependant, dans le cadre de l'application d'un produit dentaire telle qu'une composition destinée à former une digue dentaire, la spatule ne peut assurer à elle seule un dépôt efficace du produit sur la gencive. En effet, si le produit n'est pas délivré en sortie de l'embout en quantité suffisante et avec une épaisseur relativement uniforme, le praticien aura tendance à appuyer plus fortement la spatule sur la gencive du patient afin de pallier le manque d'uniformité du produit en sortie de l'embout. En appuyant trop fortement sur la spatule, il y a un risque que le produit ne soit plus déposé en continu sur la gencive du patient laissant ainsi des parties de gencive exposées. En outre, la gencive étant fragile, il n'est pas recommandé d'appuyer trop fortement sur cette dernière.

### Objet et résumé de l'invention

La présente invention a pour but de proposer une nouvelle conception d'embout d'application qui permet l'application en bande de produits visqueux ou pâteux, notamment à usage dentaire, et ce avec une épaisseur et une largeur de bande sensiblement uniformes.

Ce but est atteint grâce à un embout d'application pour produit visqueux ou pâteux comprenant un corps comportant une extrémité proximale apte à être fixée sur un dispositif de distribution dudit produit et une extrémité distale munie d'un orifice de sortie, un conduit interne s'étendant entre les extrémités proximale et distale dudit corps, le conduit interne comprend au moins une portion de forme aplatie débouchant au niveau de l'orifice de sortie, caractérisé en ce que ladite portion aplatie comporte des gorges adjacentes sur au moins un de ses côtés.

Les gorges adjacentes permettent de répartir uniformément un produit visqueux ou pâteux dans la portion de conduit de forme aplatie et de délivrer une quantité de produit sensiblement constante sur toute la largeur de la portion de conduit. On dépose ainsi au niveau de l'orifice de sortie une bande ou un ruban de produit ayant une largeur et une épaisseur uniformes.

Selon une caractéristique particulière de l'invention, l'embout comprend en outre une spatule placée à l'extrémité distale du corps de l'embout et qui s'étend au-delà de l'orifice de sortie. Cette spatule permet notamment de contrôler l'épaisseur de la bande de produit déposée. La spatule présente de préférence une largeur supérieure à celle de l'orifice de sortie. Elle est en outre constituée d'un matériau souple pour éviter les risques de lésion sur des surfaces sensibles telles que des gencives.

Selon un aspect particulier de l'invention, l'embout comporte une partie applicatrice ayant un profil de forme arrondie qui facilite le contact et l'étalement sur des surfaces elles-mêmes arrondies comme les gencives notamment.

Selon un autre aspect particulier de l'invention, l'extrémité proximale comporte un pas de vis de type Luer-lock® afin d'être compatible avec des seringues ou autres dispositifs utilisant des connexions Luer-lock®.

L'invention concerne également un dispositif d'application de produit visqueux ou pâteux comprenant une seringue apte à contenir et à délivrer ledit produit, caractérisé en ce qu'il comprend en outre un embout selon l'invention, ledit embout étant fixé à une extrémité libre de la seringue.

L'invention a encore pour objet non revendiqué un procédé de formation d'une barrière de protection ou digue dentaire sur une gencive comprenant le dépôt sur la gencive d'une bande ou ruban d'un produit visqueux ou pâteux photopolymérisable au moyen d'un embout d'application selon l'invention, et la photopolymérisation dudit produit.

Enfin, l'invention concerne en outre une utilisation d'un embout d'application selon l'invention pour l'application d'une bande ou d'un ruban d'un produit visqueux ou pâteux.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- les figures 1A, 1B et 2 sont des vues en perspectives d'un embout d'application conformément à un mode de réalisation de l'invention,
- la figure 3 est une vue en coupe de l'embout de la figure 2,
- la figure 4 est une vue en perspective d'un dispositif d'application constitué d'une seringue et de l'embout de la figure 2,
- la figure 5 est une vue en perspective montrant l'application avec un embout selon l'invention d'une bande ou ruban d'un produit visqueux photopolymérisable destiné à former une digue dentaire,
- la figure 6 est une vue en perspective montrant la photopolymérisation du produit pour former une digue dentaire.

### Description détaillée des modes de réalisation de l'invention

L'embout de l'invention trouve une application avantageuse dans le dépôt de produit à usage dentaire. Toutefois, l'embout selon l'invention peut être utilisé dans d'autres applications mettant en oeuvre le dépôt d'un produit visqueux ou pâteux tel que notamment mais non exclusivement un gel ou une crème.

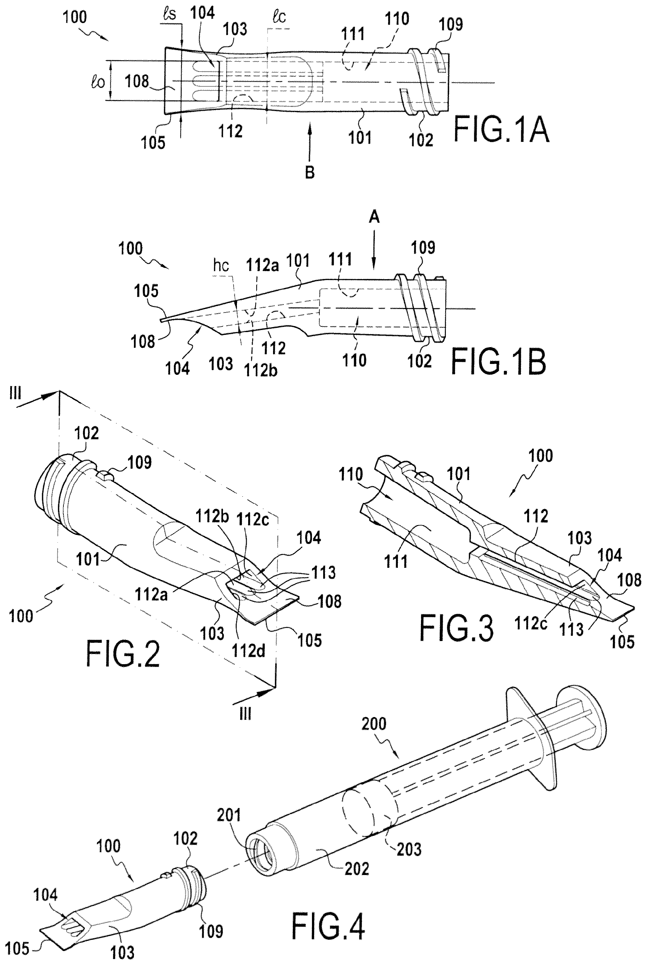

Les figures 1A, 1B, 2 et 3 représentent un embout d'application 100 destiné à déposer en bande ou ruban un produit visqueux ou pâteux conformément à un mode de réalisation de la présente invention.

L'embout 100 est formé d'un corps 101 qui s'étend entre une extrémité proximale 102 apte à être fixée sur un dispositif de distribution de produit, tel qu'une seringue comme expliqué plus loin, et une extrémité distale 103 munie d'un orifice de sortie 104.

L'embout 100 comprend un conduit interne 110 qui s'étend entre les extrémités proximale 102 et distale 103. Le conduit interne comporte une première portion 111 qui s'étend sur une distance déterminée à partir de l'extrémité proximale 102 et une seconde portion 112 qui s'étend dans le prolongement de la première portion 111 jusqu'à l'orifice de sortie 104. Dans le mode de réalisation décrit ici, la première portion de conduit 111 présente une section de forme circulaire. La première section de conduit peut toutefois présenter d'autres formes de section (carrée, polygonale, etc.).

La deuxième portion de conduit interne 112 forme un conduit interne dans l'embout 100 qui est délimité par quatre côtés, paroi ou parties 112a à 112d, les parties 112a et 112b correspondant respectivement aux parties supérieure et inférieure du conduit interne 112 tandis que les parties 112c et 112d correspondent respectivement aux deux parties latérales du conduit interne 112. Les parties 112a et 112b présentent une largeur l_{c} supérieure à la hauteur h_{c} des parties 112c et 112d de manière à former un conduit interne de section de forme aplatie sensiblement rectangulaire qui favorise l'application du produit sous forme de bande ou de ruban. Afin d'assurer un étalement contrôlé et uniforme du produit à la fois en largeur et en épaisseur, des gorges ou rainures adjacentes 113 sont ménagées sur le côté, la partie ou paroi supérieure 112a de la deuxième portion de conduit 112. En effet, les gorges 113 permettent de bien répartir et diriger le produit dans la deuxième portion de conduit 112 jusqu'à l'orifice de sortie 104.

Selon une variante de réalisation, des gorges adjacentes peuvent être ménagées sur le côté, la partie ou paroi inférieure 112b de la deuxième portion de conduit 112. Selon encore une autre variante de réalisation, des gorges adjacentes peuvent être ménagées à la fois sur le côté, la partie ou paroi inférieure 112a et sur le côté, la partie ou paroi supérieure 112b de la deuxième portion de conduit interne 112.

L'embout 100 comprend en outre une spatule 105 placée au niveau de l'extrémité distale 103 et qui s'étend au-delà de l'orifice de sortie 104. La spatule 105 présente une largeur lₛ supérieure à la largeur lₒ de l'orifice de sortie 104. La spatule 105 présente une forme évasée de sorte que sa largeur lₛ augmente progressivement au fur et à mesure que l'on s'éloigne de l'orifice de sortie 104 (figure 1A).

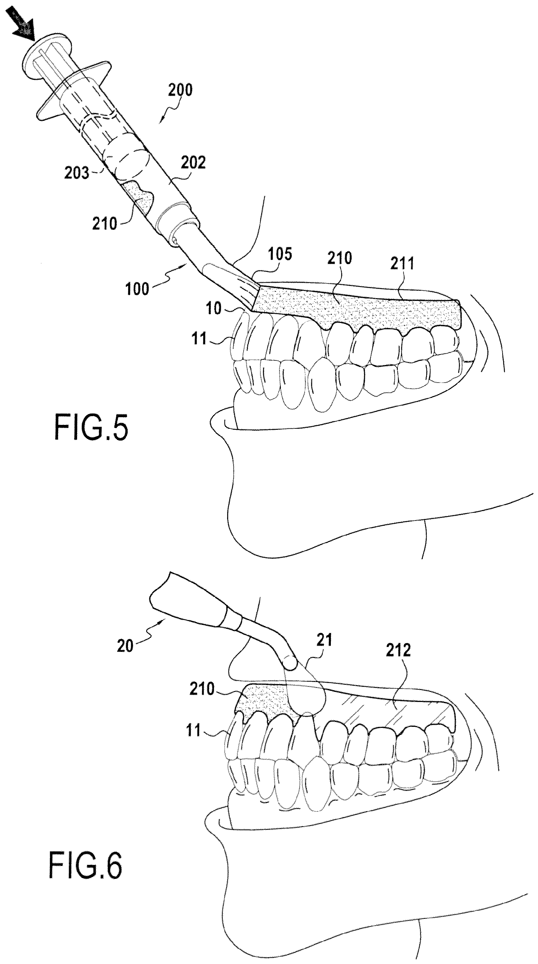

La spatule est flexible, ce qui lui permet, en se déformant facilement au contact de la surface de dépôt (figure 5), d'assurer un bon étalement du produit déposé. La flexibilité de la spatule permet en outre d'éviter les risques de lésion lors de l'application de produits sur des surfaces sensibles telles que des gencives.

L'extrémité distale 103 et la partie inférieure de la spatule 105 forment la partie applicatrice 108 proprement dite de l'embout, c'est-à-dire la partie de l'embout qui est en contact avec la surface sur laquelle le produit est déposé. Dans le mode de réalisation présenté ici, la partie applicatrice 108 présente un profil arrondi (figure 1B) qui est adapté pour bien épouser et suivre des surfaces qui présentent elles aussi une forme sensiblement arrondie comme c'est le cas, en particulier, d'une gencive.

Toutefois, la forme et la géométrie de la partie applicatrice de l'embout de l'invention peuvent être différentes afin de s'adapter à la surface sur laquelle le produit doit être appliqué.

Dans l'exemple décrit ici, le corps 101 de l'embout présente une forme coudée facilitant l'application de produit sur des surfaces arrondies telles que des gencives. Toutefois, selon la géométrie des surfaces sur lesquelles le produit doit être appliqué, le corps de l'embout pourra présenter des formes différentes.

L'embout de l'invention peut être réalisé, par exemple par moulage, avec un des matériaux suivants:
- une résine époxy de type Somos Proto-Gen™ O-XT 18240,
- un système flexible polyuréthane du type PT8472 fabriqué par la société PTM&W Industries, Inc.,
- un polymère acrylique tel que celui connu sous le nom de FullCure™ commercialisé par la société Object,
- un polymère en silicone tel que celui connu sous le nom de Silastic™ distribué par la société Dow Corning.

Les matériaux ci-dessus ou similaires permettent de former un corps pour l'embout suffisamment rigide pour être vissé sur une seringue tout en permettant une réelle flexibilité au niveau de la spatule en raison de la faible épaisseur de matériau à cet endroit. Les matériaux utilisés pour réaliser l'embout selon l'invention sont des matériaux étanches, c'est-à-dire non poreux afin de canaliser le produit à appliquer uniquement dans le conduit interne de l'embout lors de son application.

Comme illustré sur la figure 4, l'embout 100 comporte en outre au niveau de l'extrémité proximale 102 un pas de vis 109 apte à coopérer avec un filetage 201 d'une seringue 200. L'extrémité proximale 102 de l'embout 100 est ainsi fixée à l'extrémité libre 204 de la seringue 200 par vissage. La seringue 200 comporte un réservoir 202 destiné à contenir le produit visqueux ou pâteux à appliquer, le produit étant délivré dans l'embout par pression sur un piston 203 de la seringue qui avance dans le réservoir 202. La première portion de conduit 111 a de préférence une section de passage (débit volumétrique) sensiblement proche de celle de la seringue 200 de manière à ne pas gêner la sortie du produit de la seringue. En outre, la deuxième portion de conduit 112 présente de préférence une section de passage inférieure à celle de la première portion de conduit 111 de manière à optimiser le remplissage de la deuxième portion de conduit avec le produit provenant de la première portion de conduit.

Le pas de vis 109 est de préférence un pas de vis de type Luer-Lock® qui est le standard le plus répandu pour les connexions entre seringue et accessoires et qui est apte à coopérer avec le filetage 201 de type Luer Lock® de la seringue 200.

On décrit maintenant en référence aux figures 5 et 6, un exemple d'utilisation de l'embout de l'invention dans le cas de l'application d'un produit à usage dentaire destiné à former une barrière de protection ou digue dentaire. Sur la figure 5, l'embout 100 est monté sur la seringue 200 qui contient dans son réservoir 202 un produit 210 présentant une texture visqueuse ou pâteuse et qui est photopolymérisable.

Le produit 210 est appliqué sur la gencive 10 d'un patient sous forme d'une bande ou d'un ruban 211. Grâce à la forme aplatie de la deuxième portion de conduit débouchant au niveau de l'orifice de sortie ainsi qu'à la présence des gorges adjacentes, le produit 210 est délivré en sortie de l'embout sous forme d'une bande ou d'un ruban 211 ayant une largeur et une épaisseur uniforme.

Dans le cas d'une application d'un produit sur une surface de la dimension d'une gencive, l'embout de l'invention peut, à titre d'exemple, présenter les dimensions suivantes:
- longueur totale de l'embout: 33,6 mm,
- diamètre extrémité proximale (pas de vis inclus): 7,83 mm,
- largeur l_{c} deuxième portion de conduit: 3,95 mm,
- hauteur h_{c} deuxième portion de conduit: 2 mm,
- largeur maximum lₛ spatule: 7 mm.

L'étalement et la répartition uniformes du produit 210 sur la gencive 10 sont en outre facilités par la spatule 105.

Une fois le produit 210 appliqué sur toute la gencive 10, celui-ci est exposé à un rayonnement lumineux 21 émis par une lampe de photopolymérisation 20 (figure 6). Sous l'effet du rayonnement lumineux 21, le produit 210 se polymérise de manière à former une barrière de protection ou digue dentaire 212 solide et adhérente sur la gencive 10. Lorsque la photopolymérisation est terminée, la gencive du patient est alors protégée par la digue dentaire 212 des autres produits utilisés pour traiter les dents 11 tels que des produits de blanchiment par exemple.

## Revendications

1. Embout d'application (100) pour produit visqueux ou pâteux comprenant un corps (101) comportant une extrémité proximale (102) apte à être fixée sur un dispositif de distribution dudit produit et une extrémité distale (103) munie d'un orifice de sortie (104), un conduit interne (110) s'étendant entre les extrémités proximale et distale dudit corps, le conduit interne (110) comprenant au moins une portion (112) de forme aplatie débouchant au niveau de l'orifice de sortie (104),
**caractérisé en ce que** ladite portion de forme aplatie comporte des gorges adjacentes (113) sur au moins un de ses côtés.

2. Embout selon la revendication 1, **caractérisé en ce qu'**il comprend en outre une spatule (105) placée à l'extrémité distale (103) du corps (101) de l'embout, ladite spatule s'étendant au-delà de l'orifice de sortie (104).

3. Embout selon la revendication 2, **caractérisé en ce que** la spatule (105) présente une largeur supérieure à celle de l'orifice de sortie (104).

4. Embout selon la revendication 2 ou 3, **caractérisé en ce que** la spatule (105) est en matériau souple.

5. Embout selon l'une quelconque des revendications 1 à 4, **caractérisé en ce qu'**il comporte une partie applicatrice (108) ayant un profil de forme arrondie.

6. Embout selon l'une quelconque des revendications 1 à 5, **caractérisé en ce que** l'extrémité proximale (102) comporte un pas de vis (109) de type Luer-lock®.

7. Embout selon l'une quelconque des revendications 1 à 6, **caractérisé en ce que** le corps (101) de l'embout présente une forme coudée.

8. Dispositif d'application de produit visqueux ou pâteux (210) comprenant une seringue (200) apte à contenir et à délivrer ledit produit, **caractérisé en ce qu'**il comprend en outre un embout (100) selon l'une quelconque des revendications 1 à 7, ledit embout étant fixé à une extrémité libre (202) de la seringue (200).

9. Utilisation d'un embout d'application (100) selon l'une quelconque des revendications 1 à 7 pour l'application d'une bande ou d'un ruban (211) d'un produit visqueux ou pâteux (210).

## Patentansprüche

1. Applikatorspitze (100) für ein viskoses oder pastöses Produkt, umfassend einen Körper (101), der ein proximales Ende (102), das geeignet ist, an einer Vorrichtung zur Abgabe des Produkts befestigt zu werden, und ein distales Ende (103) aufweist, das mit einer Austrittsöffnung (104) versehen ist, eine innere Leitung (110), die sich zwischen dem proximalen und dem distalen Ende des Körpers erstreckt, wobei die innere Leitung (110) mindestens einen abgeflachten Abschnitt (112) aufweist, der an der Austrittsöffnung (104) mündet,
**dadurch gekennzeichnet, dass** der abgeflachte Abschnitt benachbarte Kehlen (113) auf mindestens einer seiner Seiten aufweist.

2. Spitze gemäß Anspruch 1, **dadurch gekennzeichnet, dass** sie ferner einen Spatel (105) aufweist, der am distalen Ende (103) des Körpers (101) der Spitze angeordnet ist, wobei sich der Spatel über die Austrittsöffnung (104) hinaus erstreckt.

3. Spitze gemäß Anspruch 2, **dadurch gekennzeichnet, dass** der Spatel (105) eine Breite aufweist, die größer als jene der Austrittsöffnung (104) ist.

4. Spitze gemäß Anspruch 2 oder 3, **dadurch gekennzeichnet, dass** die Spatel (105) aus flexiblem Material ist.

5. Spitze gemäß einem der Ansprüche 1 bis 4, **dadurch gekennzeichnet, dass** sie ein Applikatorteil (108) aufweist, das ein Profil mit einer abgerundeten Form aufweist.

6. Spitze gemäß einem der Ansprüche 1 bis 5, **dadurch gekennzeichnet, dass** das proximale Ende (102) ein Schraubgewinde (109) des Typs des Luer-Lock®-Anschlusses aufweist.

7. Spitze gemäß einem der Ansprüche 1 bis 6, **dadurch gekennzeichnet, dass** der Körper (101) der Spitze eine abgewinkelte Form aufweist.

8. Vorrichtung zum Auftragen eines viskosen oder pastösen Produktes (210), umfassend eine Spritze (200), die geeignet ist, das Produkt zu enthalten oder abzugeben, **dadurch gekennzeichnet, dass** es ferner eine Spitze (100) gemäß einem der Ansprüche 1 bis 7 aufweist, wobei die Spitze an einem freien Ende (202) der Spritze (200) befestigt ist.

9. Verwendung einer Applikatorspitze (100) gemäß einem der Ansprüche 1 bis 7 zum Auftragen von einem Streifen oder von einem Band (211) eines viskosen oder pastösen Produktes (210).

## Claims

1. An application tip (100) for a viscous or pasty composition, the strip comprising a body (101) including a proximal end (102) that can be fastened onto a device for dispensing said composition and a distal end (103) that is provided with an outlet orifice (104), an internal duct (110) extending between the proximal and distal ends of said body, the internal duct (110) comprising at least one portion (112) of flat shape opening out at the outlet orifice (104), the tip being **characterized in that** said flat portion includes adjacent grooves (113) in at least one of its sides.

2. The tip according to claim 1, **characterized in that** it further comprises a spatula (105) placed at the distal end (103) of the body (101) of the tip, said spatula extending beyond the outlet orifice (104).

3. The tip according to claim 2, **characterized in that** the width of the spatula (105) is greater than that of the outlet orifice (104).

4. The tip according to claim 2 or claim 3, **characterized in that** the spatula (105) is formed from flexible material.

5. The tip according to any one of claims 1 to 4, **characterized in that** it includes an applicator part (108) with a profile that is rounded in shape.

6. The tip according to any one of claims 1 to 5, **characterized in that** the proximal end (102) includes a Luer-lock® type screw thread (109).

7. The tip according to any one of claims 1 to 6, **characterized in that** the body (101) of the tip has a bent shape.

8. A device for applying a viscous or pasty composition (210), the device comprising a syringe (200) that can contain and deliver said composition, and being **characterized in that** it further comprises a tip (100) according to any one of claims 1 to 7, said tip being fastened to a free end (202) of the syringe (200).

9. The use of an application tip (100) in accordance with any one of claims 1 to 7, to apply a strip or ribbon (211) of a viscous or pasty composition (210).
